# Europäisches Patentamt
## European Patent Office
## Office européen des brevets

(19)

(11) Veröffentlichungsnummer: **0 074 643**
**B1**

(12)

# EUROPÄISCHE PATENTSCHRIFT

(45) Veröffentlichungstag der Patentschrift:
**23.04.86**

(51) Int. Cl.⁴: **B 60 J 7/10,** B 60 P 7/04

(21) Anmeldenummer: **82108374.8**

(22) Anmeldetag: **10.09.82**

(54) **Plane an Liefer- und Last-Autos.**

(30) Priorität: **10.09.81 CH 5849/81**
**06.07.82 CH 4100/82**

(43) Veröffentlichungstag der Anmeldung:
**23.03.83 Patentblatt 83/12**

(45) Bekanntmachung des Hinweises auf die Patenterteilung:
**23.04.86 Patentblatt 86/17**

(84) Benannte Vertragsstaaten:
**AT BE DE FR GB IT LU NL SE**

(56) Entgegenhaltungen:
**FR - A - 2 383 819**
**GB - A - 1 595 792**
**US - A - 4 093 302**

(73) Patentinhaber: **Igloi, Georg, Gotthardstrasse 51,**
**CH-8027 Zürich (CH)**

(72) Erfinder: **Igloi, Georg, Gotthardstrasse 51,**
**CH-8027 Zürich (CH)**

(74) Vertreter: **Patentanwälte Müller-Boré, Deufel, Schön,**
**Hertel, Lewald, Otto, Postfach 26 02 47 Isartorplatz 6,**
**D-8000 München 26 (DE)**

**Beschreibung**

Die Erfindung betrifft eine Plane zum Abschluss des Laderaumes eines Liefer- oder Lastautos mit parallel zueinander angeordneten, mit Luft gefüllten Stabilisierungskörpern.

Strassenfahrzeuge, insbesondere Liefer- und Lastautos besitzen als Abschluss des Laderaumes eine Plane, welche aus einem wasserdichten Gewebe besteht. Beim Fahren kommt die Plane auch im gespannten Zustand durch den Fahrtwind ins Flattern und erzeugt einen bremsend wirkenden Strömungswiderstand. Ausserdem verursacht das Flattern der Plane ein starkes Geräusch und die Plane wird darüberhinaus leicht beschädigt. Führt das Auto nicht ausreichend befestigte, sperrige Transportgüter mit sich, so können diese während ihrer Bewegung auf dem Fahrzeug die Plane leicht durchlöchern.

Durch die US-A 4 093 302 ist die Abdeckung eines Campingfahrzeugs bekannt, welche aus einer doppellagigen Plane aus zwei dünnen Kunststoffschichten besteht, welche durch eine Vielzahl von parallelen Nähten miteinander verbunden sind. Dadurch ergibt sich ein luftmatratzenartiges Gebilde, welches aufblasbar ist und dann die Wärmeisolierung des Fahrzeugs verbessert. Diese in der Herstellung aufwendige und damit kostspielige Fahrzeugabdeckung kann sehr leicht beschädigt werden und ist deshalb für Liefer- und Lastwagen ungeeignet.

Aus der FR-A 2 383 819 ist eine Fahrzeugabdeckung bekannt, bei welcher ein weitmaschiges, aus Bändern gebildetes Netz zur Verstärkung angeordnet ist. Diese sich kreuzenden Bänder bestehen vorzugsweise aus Kunststoffgewebe und können direkt in die Plane eingewebt sein. Die Bänder erbringen nur eine streifenartige Verstärkung und verhindern das Flattern der Abdeckungsflächen zwischen den Bändern nicht, so dass bei schnellerem Fahren die störenden Fahrgeräusche und ein vergrösserter Luftwiderstand auftreten. Ferner trägt das Flattern auch in diesem Fall zu einer vorzeitigen Abnutzung und Beschädigung der Plane bei.

Der Erfindung liegt die Aufgabe zugrunde, eine Plane zum Abschluss des Laderaumes eines Liefer- oder Lastautos zu schaffen, an welcher das Flattern, verursacht durch den Fahrtwind, weitgehend ausgeschlossen ist, so dass Beschädigung der Plane, Geräuschbildung und hoher Luftwiderstand ausgeschlossen werden.

Diese Aufgabe wird gemäss dem kennzeichnenden Teil des Anspruchs 1 erfindungsgemäss dadurch gelöst, dass die Stabilisierungskörper im Abstand zueinander an den Aussenseiten der Plane befestigt sind. Die Stabilisierungskörper erbringen eine Art Gerüst, zwischen welchem die Flächen der Plane eingespannt sind, so dass die vom Fahrtwind hervorgerufenen Sogkräfte ihre Wirkung auf die Flächen der Plane nicht mehr ausüben können.

Bevorzugte Ausgestaltungen der Erfindung sind in den Unteransprüchen angegeben.

Ausführungsbeispiele der Erfindung werden anhand der Zeichnung erläutert. Es zeigen:

Fig. 1 in schematischer Darstellung das Oberteil eines Liefer- oder Lastautos,

Fig. 2 eine Ansicht der Rückseite des Fahrzeugs nach Fig. 1,

Fig. 3 eine Draufsicht auf einen mit Luft gefüllten Stabilisierungskörper

Fig. 4 einen senkrechten Schnitt nach der Linie IV-IV in Fig. 1 in grösserem Massstab.

Fig. 5 bis 7 Varianten der Stabilisierungskörper in sinngemässen Schnitten der Linie IV-IV in Fig. 1.

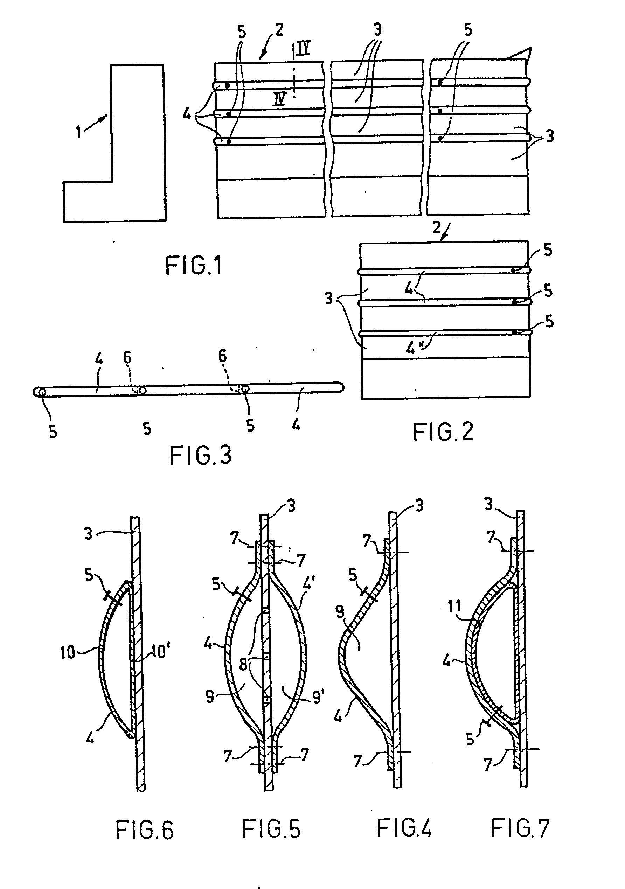

1 bezeichnet die Führerkabine und 2 den Lade-Hinterteil eines Autos. 3 bezeichnet die konventionelle Plane, welche die Seitenwände und die Rückseitenwand abschliesst. Die Plane 3 liegt in üblicher Weise einem nicht besonders gezeichneten Gestell aus Leisten, Stäben oder Rohren an. Die Plane 3 ist wegnehmbar oder aufrollbar. In Abständen zueinander sind an der Plane 3 in der Längsrichtung des Autos verlaufende Stabilisierungskörper 4 angeordnet. Die Stabilisierungskörper 4 sind schlauchartige, je einen Hohlraum 9 enthaltende Wulste, die luftdicht an den Aussenseiten der Plane festgelegt und mit Luftventilen 5 ausgerüstet sind. Die in der Längsrichtung des Autos verlaufenden Stabilisierungskörper 4 sind durch Trennwände 6 unterteilt, wie in Fig. 3 angedeutet. Jeder Unterteilung der Stabilisierungskörper 4 ist ein Luftventil 5 zugeordnet. Die Plane an der Rückseite des Fahrzeuges ist kleiner als an den Längsseiten, und jeder Stabilisierungskörper weist dabei nur ein Ventil 5 auf. Die oberen und unteren Endteile der Stabilisierungskörper 4 sind abgebogen und deren Flanschen sind an den durch strichpunktierte Linien markierten Stellen 7 durch Nähte oder Verklebung festgelegt, wie aus Fig. 4 hervorgeht.

Gemäss der Variante nach Fig. 5 sind die Innen- und Aussenseiten der Plane 3 mit je einem Stabilisierungskörper 4, 4' versehen. Die Hohlräume 9, 9' in den Stabilisierungskörpern 4, 4' stehen durch Luftzirkulationslöcher 8 miteinander in Verbindung. Die innenseitigen Stabilisierungskörper 4' dämpfen beim Anschlagen die Bewegungsschwingungen der Ladegüter während dem Fahren, was Beschädigungen der Plane als auch der Ladegüter erschwert.

Nach Fig. 6 ist jeder Stabilisierungskörper 4 im Querschnitt gesehen ein kalottenartiger Schlauch, dessen gewölbte Seite 10 sich an seiner Aussenseite befindet. Mit der flachen Innenseite 10' ist der Stabilisierungskörper 4 an der zugekehrten Plane 3 festgemacht. Diese Ausführung ist zum Selbstmontieren der Stabilisierungskörper 4 and der Plane gut geeignet.

Nach Fig. 7 liegt in jedem Stabilisierungskörper 4 zwischen diesen und der zugehörigen Plane 3 ein Luftschlauch 11. Eine solche Ausführung ist teurer, besitzt jedoch eine hohe Stabilität und ist für Fälle, wo hohe Anforderungen an die Plane

und die Dämpfung der Bewegungsschwingungen der Ladegüter gestellt werden, zweckmässig.

Die Stabilisierungskörper 4 lassen sich direkt bei der Fabrikation der Plane 3 oder auch nachträglich auf geeignete Art, sei es durch Nähen, Ankleben, anbringen resp. befestigen. Die Stabilisierungskörper 4 brauchen nicht unbedingt alle in der Höhenrichtung die gleiche Grösse aufzuweisen. In Fig. 2 ist beispielsweise der unterste Stabilisierungskörper 4″ an der Rückseitenwand kleiner.

### Patentansprüche

1. Plane zum Abschluss des Laderaumes eines Liefer- oder Lastautos mit parallel zueinander angeordneten, mit Luft gefüllten Stabilisierungskörpern (4), dadurch gekennzeichnet, dass die Stabilisierungskörper (4) im Abstand zueinander an den Aussenseiten der Plane (3) befestigt sind.

2. Plane nach Patentanspruch 1, dadurch gekennzeichnet, dass die Stabilisierungskörper (4) aufblasbar sind.

3. Plane nach den Patentansprüchen 1 und 2, dadurch gekennzeichnet, dass die Stabilisierungskörper (4) mit Luftventilen (5) ausgerüstet sind.

4. Plane nach Patentanspruch 1, dadurch gekennzeichnet, dass die Stabilisierungskörper (4) schlauchartig und im Querschnitt gesehen kalottenförmig sind, wobei die flache Seite der zugekehrten Plane (3) anliegt und mit dieser fest verbunden ist (Fig. 6).

5. Plane nach den Patentansprüchen 1 bis 4, dadurch gekennzeichnet, dass an den Innen- und Aussenseiten der Plane (3) Stabilisierungskörper (4) vorgesehen sind, wobei die zwischen diesen liegende Plane (3) Luftzirkulationslöcher (10) aufweist (Fig. 5).

6. Plane nach den Patentansprüchen 1 bis 5, dadurch gekennzeichnet, dass in den Hohlräumen (9) der Stabilisierungskörper (4) je ein Luftschlauch angeordnet ist (Fig. 7).

### Claims

1. A tarpaulin for sealing the cargo space of a delivery vehicle or lorry, with air-filled stabilizing bodies disposed paralle to each other, characterized in that the stabilizing bodies (4), which are spaced apart, are fixed to the external sides of the tarpaulin (3).

2. A tarpaulin in accordance with claim 1, characterized in that the stabilizing bodies (4) are inflatable.

3. A tarpaulin in accordance with claims 1 and 2, characterized in that the stabilizing bodies (4) are equipped with air valves (5).

4. A tarpaulin in accordance with claim 1, characterized in that the stabilizing bodies (4) are in the form of hoses and hemispherical in shape when viewed in cross-section, with their flat sides bearing against the tarpaulin (3) and being fixed thereto (Fig. 6).

5. A tarpaulin in accordance with claims 1 to 4, characterized in that stabilizing bodies (4) are provided on the inside and the outside of the tarpaulin (3), the tarpaulin (3) having air-circulation holes (10) between them (Fig. 5).

6. A tarpaulin in accordance with claims 1 to 5, characterized in that an air tube is contained inside each hollow chamber (9) in the stabilizing bodies (4) (Fig. 7).

### Revendications

1. Bâche pour la fermeture du compartiment de chargement d'une fourgonnette ou d'un camion, munie de corps de stabilisation (4) remplie d'air, disposés parallèlement entre eux, caractérisée par le fait que les corps de stabilisation (4) sont fixés avec espacement entre eux aux côtés extérieurs de la bâche (3).

2. Bâche selon la revendication 1, caractérisée par le fait que les corps de stabilisation (4) sont gonflables.

3. Bâche selon les revendications 1 et 2, caractérisée par le fait que les corps de stabilisation (4) sont équipés de valves à air.

4. Bâche selon la revendication 1, caractérisée par le fait que les corps de stabilisation sont tubulaires et en forme de calotte, vus en coupe transversale, le côté plat étant appliqué sur la bâche adjacente (3) et relié solidairement à celle-ci (figure 6).

5. Bâche selon les revendications 1 à 4, caractérisée par le fait qu'aux côtés intérieur et extérieur de la bâche (3) sont prévus des corps de stabilisation (4), la bâche (3) située entre ceux-ci présentant des trous de circulation d'air (10) (figure 5).

6. Bâche selon les revendications 1 à 5, caractérisée par le fait que dans les cavités (9) des corps de stabilisation (4) est chaque fois disposé un boyau à air (figure 7).

FIG.1

FIG.2

FIG.3

FIG.6   FIG.5   FIG.4   FIG.7